# FASCICULE DE BREVET EUROPEEN

(11) **EP 0 522 989 B1**
(45) Date de publication et mention de la délivrance du brevet: **16.10.1996**
(21) Numéro de dépôt: 92470016.4
(22) Date de dépôt: 27.05.1992
(51) Int. Cl.: G01F 23/16

(54) **Dispositif pour la détection opto-électronique de la quantité de liquide dans un réservoir**
Vorrichtung zur optoelektronischen Bestimmung der Flüssigkeitsmenge in einem Behälter
Device to optoelectronically detect the quantity of liquid in a container

(30) Priorité: 28.05.1991 FR 9106561
(43) Date de publication de la demande: 13.01.1993
(73) Titulaire: SOCOP SA, F-25000 Besançon (FR)
(72) Inventeur: Millet, Jean, F-25000 Besançon (FR)
(74) Mandataire: Poupon, Michel

(56) Documents cités:
- WO-A-81/02062
- DE-A- 2 849 186
- DE-A- 3 400 946
- FR-A- 830 081
- US-A- 4 464 936
- US-A- 4 620 093

## Description

La présente invention a pour objet un dispositif pour la mesure optoélectronique de la quantité de liquide, en particulier inflammable, dans un réservoir.

On connait déjà des dispositifs optoélectroniques, par exemple tels que décrits par le brevet FR 2 171 868.

Ils ne donnent cependant pas totalement satisfaction et le besoin se fait sentir de dispositifs fiables.

Le document DE-A-3 400 946 décrit un dispositif pour la mesure de la quantité de liquide mais ce document ne comprend pas de procédé optique. Le document US-A-4 464 936 décrit un dispositif pour la détection d'un état de suppression.

Conformément à l'invention, ce problème est résolu avec un dispositif pour la mesure optoélectronique de la quantité de liquide, en particulier inflammable, dans un réservoir, caractérisé en ce qu'il comporte un dispositif pour la mesure optoélectronique de la quantité de liquide, en particulier inflammable, dans un réservoir caractérisé en ce qu'il comporte en combinaison :
- un moyen de mesure qui est un capteur de pression ou de variation de pression, par exemple une membrane souple, dont la déformation génère un déplacement d'un organe dudit moyen de mesure,
- un système de transmission optique comportant au moins un ensemble émetteur de flux lumineux, un ensemble récepteur de flux lumineux, dont la position relative par rapport au moyen de mesure est telle que le déplacement dudit organe généré par le moyen de mesure entraîne une variation d'un au moins des paramètres de la transmission du flux lumineux, cette variation de paramètre génère une variation du signal lumineux reçu par l'ensemble récepteur qui est convertie dans une unité de traitement électronique pilotant le dispositif en un signal électrique compatible avec un indicateur pour l'affichage de la mesure.

Selon l'idée générale inventive, le déplacement généré par la déformation du moyen de mesure fait varier un ou plusieurs des paramètres de la transmission du système de transmission optique, à savoir :
- la déviation du faisceau lumineux,
- la variation de la distance de transmission et/ou d'alignement de la transmission et/ou la quantité d'énergie réfléchie et/ou la quantité d'énergie transmise.

Cette variation de paramètre génère une variation du signal lumineux dans l'ensemble récepteur qui est convertie, dans l'unité de traitement électronique, en un signal électrique compatible avec l'indicateur.

En outre, le déplacement généré par la déformation du moyen de mesure peut être exploité directement pour faire varier l'un au moins des paramètres de la transmission mais il peut être amplifié, préalablement à son exploitation, par exemple par un moyen mécanique d'amplification.

Les moyens employés pour la variation des paramètres de la transmission sont de préférence mais non limitativement des moyens réfléchissants, et/ou des caches, dont l'emplacement et le nombre donnent lieu à plusieurs variantes d'exécution non limitatives, objets de la description qui suit.

On comprendra mieux l'invention à l'aide de la description ci-après de divers modes de réalisation, faite en référence aux figures annexées suivantes :
- la figure 1 qui est un schéma fonctionnel d'ensemble d'un dispositif conforme à l'invention,
- la figure 2 qui représente la structure de base d'un dispositif conforme à l'invention,
- la figure 3 qui représente une première variante de réalisation où l'ensemble émetteur est placé directement sous le capteur,
- la figure 4 qui représente une autre variante de réalisation où les ensembles émetteur et récepteur sont placés tous deux sous le capteur,
- la figure 5 qui correspond à une autre variante de réalisation où émetteur et moyen réfléchissant occupent des positions inverses par rapport à celles de la figure 2,
- la figure 6 qui est une variante des figures 2 et 3,
- la figure 7 qui est une variante agissant par restriction de flux,
- la figure 8 montrant une variante où le moyen de mesure joue le rôle d'élément réfléchissant,
- la figure 9 montrant une variante fonctionnant sur le principe d'alignement entre émetteur et récepteur,
- la figure 10 qui montre une variante exploitant la répartition énergétique spaciale spécifique du faisceau optique,
- la figure 11 qui est une variante exploitant la variation de quantité d'énergie réfléchie,
- la figure 12 qui est une variante exploitant la variation d'absorption lumineuse sur le point d'impact du moyen réfléchissant,
- la figure 13 qui est une variante agissant par atténuation du signal optique émis,
- les figures 14 à 16 qui sont des variantes mettant en oeuvre une amplification mécanique.

Un dispositif de mesure optoélectronique conformé à l'invention peut comporter la totalité ou une partie des moyens suivants pris en combinaison :
- un moyen de mesure (3) de pression ou de variation de pression, par exemple une membrane,
- un dispositif mécanique (4) d'amplification de déplacement,
- un système de transmission optique (56) comportant un ensemble émetteur (5) et un ensemble récepteur (6) de signaux optiques,
- une unité de traitement électronique (7) pilotant l'ensemble émetteur (5),
- un indicateur (8) affichant la quantité de liquide dans le réservoir (2).

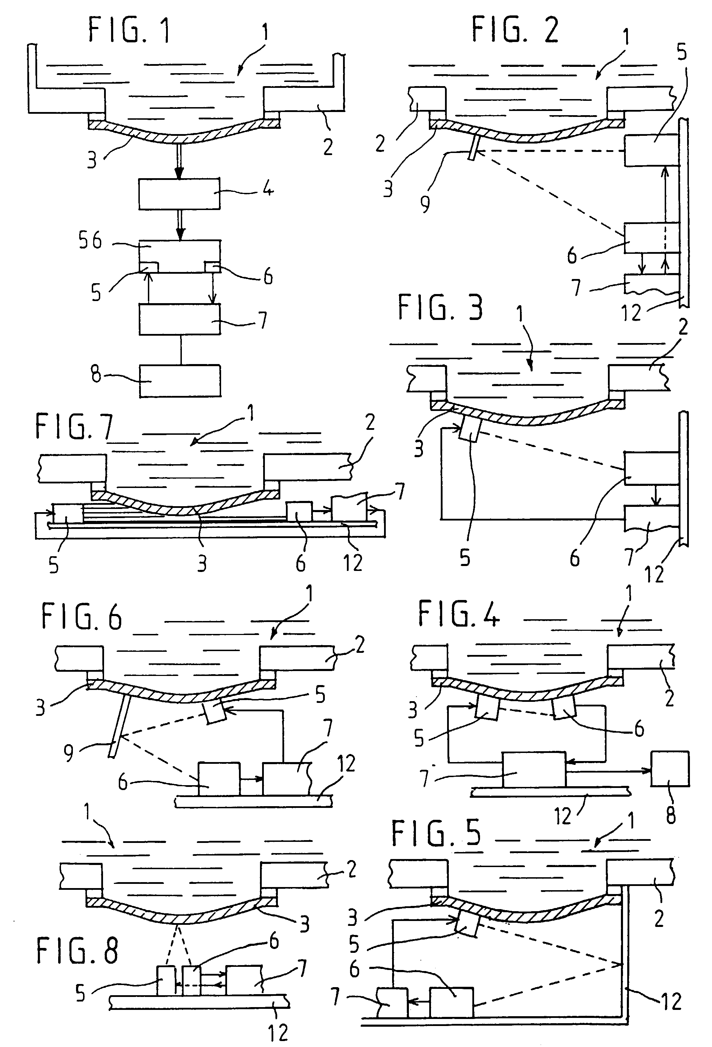

Selon le principe de fonctionnement schématisé en figure 1 la pression du liquide (1) contenu dans le réservoir (2) modifie la forme de la membrane (3). Le déplacement issu de cette déformation peut être amplifié par le moyen mécanique (4) ou exploité directement.

Le déplacement résultant fait varier un ou plusieurs des paramètres de transmission optique du système (56) par exemple :
- la déviation du faisceau lumineux,
- la variation de :
   . la distance de transmission,
   . l'alignement de la transmission,
   . la quantité d'énergie réfléchie,
   . la quantité d'énergie transmise.

L'unité électronique (7) pilote le ou les émetteurs (5) et convertit le signal reçu du ou des récepteurs (6) en un signal électrique compatible avec l'indicateur (8).

L'unité de traitement (7) est différente pour chacunes des mises en oeuvre mais répond toujours aux caractéristiques décrites ci-dessus.

On décrit ci-après en détail les moyens employés.

Le moyen de mesure (3) peut être une entité indépendante du fond du réservoir ou fixée sur un orifice du fond du réservoir comme sur les figures.

C'est par exemple une membrane (3) constituée d'un matériau gardant ses propriétés mécaniques et chimiques lors d'un long séjour en contact avec le liquide (1) de type hydrocarbure ou autre.

Le moyen de mesure peut être orienté en tout sens : par exemple, la membrane peut être placée à proximité du fond du réservoir ou intégrée à celui-ci pour pouvoir capter les quantités de liquide les plus faibles.

Le liquide peut arriver au contact de la membrane ou du moyen de mesure à travers un système à restriction de passage qui apportera ainsi un amortissement visqueux au mouvement vibratoire du liquide engendré par d'éventuelles vagues ou vibrations du support du réservoir et éviter ainsi au signal de sortie de fluctuer.

Le moyen mécanique (4) a pour fonction d'amplifier mécaniquement la déformation de la membrane afin d'en avoir une exploitation plus aisée dans le système de transmission (56) et une plus grande précision de mesure.

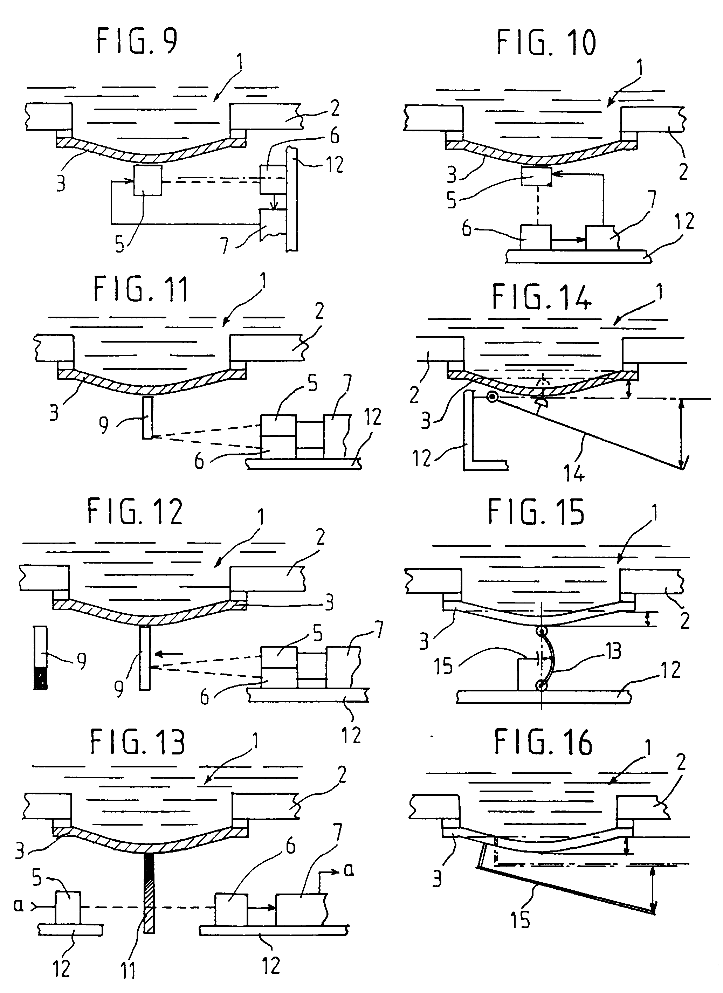

Plusieurs variantes de réalisation peuvent être mises en oeuvre comme par exemple celles représentées aux figures 14, 15 et 16.

Selon la variante présentée en figure 14, l'amplification est réalisée par un bras de levier (14). Ce levier est articulé sur le corps d'un capteur (12), le point de contact permanent avec la membrane est assuré par un système à ressort calibré de telle façon qu'il ne perturbe que légèrement l'élasticité de la membrane (3).

Selon la variante présentée en figure 15 l'amplification est réalisée par l'utilisation d'une fine lame élastique (13) qui est mise sous contrainte de flambage par la membrane.

Dans ce type de contrainte, un faible déplacement longitudinal provoque une forte concavité de la lame (13) qui permet d'amplifier ainsi le déplacement primitif.

La lame (13) est articulée à ses deux extrémités avec la membrane (3) d'une part, le corps (12) du capteur d'autre part. Une butée (15) solidaire du corps (12) du capteur n'autorise le déplacement que dans un sens et peut exercer une précontrainte en flexion sur la lame (13) qui est calculée de façon à ne pas trop modifier les caractéristiques d'élasticité par rapport au dispositif sans amplification mécanique.

Selon la variante présentée en figure 16, le système d'amplification mécanique utilise un bras (16) qui est solidaire de la membrane (3). On exploite ici la déformation angulaire de la surface inférieure de la membrane (3). En assimilant l'arc décrit par l'extrémité du bras (16) à une droite, on obtient un déplacement plus important.

Le système de transmission (56) comprend un ensemble d'émission (5) et un ensemble de réception (6), en outre les paramètres de la transmission sont modifiés, selon la variante utilisée, par exemple par un moyen réfléchissant (9), et/ou un moyen de restriction de passage (10) et/ou un moyen d'atténuation optique (11) que l'on décrira plus loin en détail.

L'ensemble d'émission (5) est constitué d'une ou plusieurs sources lumineuses qui sont commandées électriquement par l'unité électronique (7). Le faisceau émis est simple ou multiple, concentré ou diffusant. L'émission peut se faire en infrarouge comme dans le domaine visible. L'intensité du faisceau émis peut éventuellement être modifiée automatiquement par l'unité électronique (7). Le faisceau lumineux émis est canalisé ou non par des caches opaques qui ne font pas l'objet de la présente invention, la forme de ces caches et donc du faisceau résultant pouvant apporter une correction (topographie du contenant). Ces caches peuvent être constitués par le support de l'émetteur.

L'ensemble de réception (6) est constitué d'une ou plusieurs entités indépendantes ou non. Le récepteur (6) consiste en une échelle de cellules photosensibles ou en un répceteur d'intensité lumineuse. De la même manière que pour l'émetteur, des caches peuvent également canaliser le flux lumineux reçu et être intégrés au support du récepteur.

Les composants émetteurs et récepteurs sont de type optoélectronique et peuvent comporter par construction leurs propres lentilles.

L'unité de traitement électronique (7) est de conception numérique, analogique ou mixte. Elle commande l'émetteur (5) et convertit les signaux issus du récepteur (6) en un signal compatible avec un indicateur (8) de type analogique ou numérique (voir figure 1).

Dans le cas d'un système numérique, la topographie du réservoir peut y être enregistrée afin d'apporter les corrections nécessaires à l'indication de la quantité de liquide réelle dans le réservoir. Dans le même esprit, la correction peut se faire de manière analogique. On peut trouver également des corrections pour compenser l'évolution de certains paramêtres physiques (température, densité du liquide (1), vagues dans le cas d'un réservoir mobile, etc...) ou tout simplement pour linéariser le capteur.

La figure 2 est la structure de base du dispositif de l'invention. Le système de transmission (56) comprend un moyen réfléchissant (9) spécifique judicieusement placé sur la membrane (3), agissant par déviation du faisceau lumineux issu de l'ensemble émetteur (5), le faisceau résultant balaye l'ensemble de réception (6) qui peut être une échelle de cellules photosensibles ou un récepteur d'intensité lumineuse.

Dans le cas où le récepteur (6) est constitué d'une échelle de cellules, la(les) cellule(s) éclairée(s) rendra(ont) compte de la position angulaire du faisceau lumineux donc de la pression exercée sur la membrane. Une pondération de chaque cellule permet d'avoir une information continue de cette pression.

Basée sur le même principe de déviation angulaire, la variante de la figure 3 consiste à remplacer l'élément réfléchissant (9) par l'émetteur (5) lui-même, qui est alors solidaire de la membrane dont la déformation modifie la direction du faisceau optique émis. La partie réceptrice est identique à celle décrite figure 2 et on peut, bien entendu, inverser les positions respectives de l'émetteur et du récepteur.

La figure 4 est une variante de la figure 3 : la position du récepteur (6) est alors sur la membrane (3). On obtient ainsi un déplacement angulaire relatif double. Toutes les autres parties sont identiques à celles de la figure 3.

Dans la variante de la figure 5, le moyen réfléchissant (9) et l'émetteur (5) échangent leurs positions respectives de la figure 2. Le récepteur (6) quant à lui est placé pour être atteint par le faisceau résultant. Les positions de l'émetteur (5) et du récepteur (6) peuvent être inversées ; les autres parties sont identiques à celles de la figure 2.

La figure 6 présente une variante des figures 2 et 3. L'émetteur (5) et le moyen réfléchissant (9) sont fixés sur la membrane, le récepteur (6) est fixé sur le corps (12) du capteur et reçoit le faisceau résultant. On obtient un déplacement angulaire relatif double. On peut échanger les positions respectives de l'émetteur (5) et du récepteur (6).

La figure 7 présente un autre principe du système de transmission (56). Lorsque la pression est très faible, le faisceau lumineux émis par l'émetteur (5) circule intégralement entre la membrane (3) et le corps (12) du capteur vers le récepteur (6) qui est ici un récepteur d'intensité lumineuse.

La déformation de la membrane (3) modifie la section de passage, donc l'intensité lumineuse transmise au récepteur (6), entre la membrane elle-même et le corps (12) du capteur. Le corps (12) du capteur peut comporter une contre-forme pour occulter complétement le faisceau quant la déformation est au maximum de sa valeur.

Sur la variante de la figure 8, la surface centrale de la membrane (3) joue le rôle d'élément réfléchissant. La position de cette surface par rapport au point d'intersection des axes optiques de l'émetteur (5) et du récepteur (6) modifie l'énergie du faisceau lumineux réfléchi. La partie réceptrice (6) consiste ici en un récepteur d'intensité lumineuse.

La figure 9 décrit un principe d'alignement entre émetteur et récepteur. L'émetteur (5) est fixé sur la membrane (3), son axe d'émission étant quasiment perpendiculaire au déplacement sensiblement linéaire de son point de fixation. L'axe de réception est pratiquement parallèle à l'axe d'émission dans le plan de la figure. La déformation de la membrane (3) induit une modification de l'entraxe émetteur-récepteur qui se traduit par une variation de l'excitation lumineuse du récepteur (6). Le récepteur peut être de type échelle de cellules sensibles ou récepteur d'intensité lumineuse. La sensibilité du système sera d'autant plus grande que les ouvertures numériques de l'émetteur (5) et du récepteur (6) seront faibles. On peut échanger les positions respectives de l'émetteur (5) et du récepteur (6).

La variante de la figure 10 exploite la répartition énergétique spatiale spécifique de la lumière émise par l'émetteur (5). L'émetteur (5) est fixé sur la membrane (3), son axe d'émission est sensiblement parallèle au déplacement de son point de fixation. L'axe de réception est quasiment confondu avec celui d'émission ; la déformation de la membrane (3) modifie la distance entre l'émetteur (5) et le récepteur (6) constitué ici d'un récepteur d'intensité lumineuse.

Compte tenu de la répartition énergétique spatiale spécifique de la lumière émise par l'émetteur (5), le récepteur (6) verra une intensité différente selon l'éloignement de l'émetteur (5).

On peut échanger les positions respectives de l'émetteur (5) et du récepteur (6).

Le principe de la variante mise en oeuvre à la figure 11 utilise la réflexion sur un élément (9). Cet élément réfléchissant (9) est fixé sur la membrane (3) de telle façon que son plan réflecteur soit parallèle au déplacement du point de fixation. Les axes de l'émetteur (5) et du récepteur (6) sont concourants en un point du plan réflecteur, leur axe médian étant orthogonal à ce plan.

Lorsque la membrane (3) se déforme, l'élément (9) renvoie une partie du faisceau émis vers le récepteur (6) constitué ici d'un récepteur d'intensité lumineuse. La sensibilité du dispositif est d'autant plus élevée que (5) et (6) ont des ouvertures numériques de faible valeur.

Quand la membrane (3) n'est pas sous pression, le faisceau émis n'est pas réfléchi par l'élément réfléchissant (9). Lorsque la membrane présentera une déformation maximale, le faisceau sera totalement réfléchi au coefficient d'absorption de l'élément (9) près.

Dans la mise en oeuvre de la figure 12, un écran (9) fixé sur la membrane (3) et présentant une transition du noir au blanc est utilisé, cette transition pouvant être plus ou moins franche et présenter un dégradé de gris suivant la sensibilité désirée.

Les axes optiques de l'émetteur (5) et du récepteur (6) ont les mêmes positions géométriques que ceux de la figure 11 ; par contre contrairement au système de la figure 11, le faisceau lumineux atteint toujours l'écran (9). C'est le coefficient d'absorption de l'écran (9) au niveau du point d'impact qui varie en fonction de la position de (9) qui dépend elle-même de la déformation de la membrane (3). Le récepteur (6) qui est ici un récepteur d'intensité lumineuse reçoit donc une excitation dépendante de la pression exercée par le fluide (1).

Dans la variante représentée à la figure 13, le principe est différent en ce qui concerne la variation infligée au système de transmission (56). L'élément (11) est une fine lame dont l'opacité varie suivant le point de traversée considéré. Le faisceau lumineux issu de l'émetteur (5) traverse la lame (11) ; le faisceau atténué résultant vient ensuite exciter le récepteur (6) ici d'intensité lumineuse.

L'élément (11) est fixé sur la membrane (3) qui, en se déformant, modifie de ce fait l'atténuation du faisceau issu de (5).

Bien entendu, on peut réaliser d'autres variantes ou apporter des modifications à l'une ou l'autre des variantes décrites, sans sortir de la protection revendiquée, pour autant que l'on reste dans le cadre des équivalents techniques.

Le procédé tel que décrit présente l'intérêt d'une mesure sans contact mécanique ni électrique, ce qui est particulièrement recherché dans les milieux agressifs.

## Revendications

1. . Dispositif pour la mesure optoélectronique de la quantité de liquide, en particulier inflammable, dans un réservoir caractérisé en ce qu'il comporte en combinaison :
- un moyen de mesure (3) qui est un capteur de pression ou de variation de pression dont la déformation génère un déplacement d'un organe (3) dudit moyen de mesure,
- un système de transmission optique (56) comportant au moins un ensemble émetteur (5) de flux lumineux, un ensemble récepteur (6) de flux lumineux, dont la position relative par rapport au moyen de mesure (3) est telle que le déplacement dudit organe (3) généré par le moyen de mesure (3) entraîne une variation d'un au moins des paramètres de la transmission du flux lumineux, cette variation de paramètre génère une variation du signal lumineux reçu par l'ensemble récepteur qui est convertie dans une unité de traitement électronique (7) pilotant le dispositif en un signal électrique compatible avec un indicateur (8) pour l'affichage de la mesure.

2. Dispositif pour la mesure optoélectronique selon la revendication précédente, caractérisé en ce que l'unité de traitement électronique pilote l'ensemble émetteur (5).

3. Dispositif pour la mesure optoélectronique selon l'une des revendications précédentes, caractérisé en ce qu'il comporte en outre un dispositif mécanique (4) d'amplification du déplacement du moyen de mesure.

4. Dispositif selon l'une quelconque des revendications précédentes, caractérisé en ce que le moyen pour modifier un paramètre de transmission est un moyen réfléchissant (9) et/ou un moyen de restriction de passage (10) et/ou un moyen d'atténuation optique (11).

5. Dispositif selon l'une quelconque des revendications précédentes, caractérisé en ce que le récepteur (6) est constitué d'une échelle de cellules photosensibles ou d'un récepteur d'intensité lumineuse et en ce que le moyen de mesure (3) est une membrane souple.

6. Dispositif selon l'une quelconque des revendications précédentes, caractérisé en ce que le moyen de mesure (3) peut être une entité indépendante du réservoir.

7. Dispositif selon l'une des revendications précédentes, caractérisé en ce que le liquide arrive au contact du moyen de mesure au travers d'un système à restriction de passage.

8. Dispositif selon l'une des revendications précédentes, caractérisé en ce que le système de transmission (56) comprend un moyen réfléchissant (9) placé sur la membrane et agissant par déviation du faisceau lumineux issu de l'ensemble émetteur.

9. Dispositif selon l'une des revendications 1 à 7, caractérisé en ce que l'un au moins des ensembles émetteur (5) ou récepteur (6) est solidaire du moyen de mesure de sorte que sa déformation modifie la direction du faisceau optique.

10. Dispositif selon l'une des revendications 1 à 7, caractérisé en ce que le moyen de mesure (3) est réfléchissant.

11. Dispositif selon l'une des revendications 1 à 7, caractérisé en ce que le déplacement du moyen de mesure agit par restriction de flux lumineux.

12. Dispositif selon l'une des revendications 1 à 7, caractérisé en ce que le déplacement du moyen de mesure agit par variation de l'alignement émetteur-récepteur.

13. Dispositif selon l'une des revendications 1 à 7, caractérisé en ce que le déplacement du moyen de mesure exploite la répartition énergétique spatiale et modifie la distance entre émetteur et récepteur.

14. Dispositif selon la revendication 8, caractérisé en ce que le moyen réfléchissant (9) comporte un écran à coefficient d'absorption variable.

15. Dispositif selon l'une des revendications 1 à 7, caractérisé en ce que le système de transmission optique (56) comprend un élément (11) à opacité variable placé sous la membrane (3) et interposé entre l'émetteur et le récepteur pour atténuer le faisceau optique.

## Claims

1. Device for the optoelectronic measurement of the quantity of liquid, more especially inflammable liquid, in a tank, characterised in that it comprises, in combination:
- a measuring means (3), which is a sensor of pressure or of pressure variation, the deformation of which sensor causes a displacement of a member (3) of said measuring means; and
- an optical transmission system (56) comprising at least one assembly (5) for transmitting luminous flux, one assembly (6) for receiving luminous flux, the relative position of said assemblies relative to the measuring means (3) being such that the displacement of said member (3), caused by the measuring means (3), entrains a variation in at least one of the parameters for the transmission of the luminous flux, and this parameter variation causes a variation in the luminous signal received by the receiving assembly which is converted, in an electronic processing unit (7) driving the device, into an electrical signal which is compatible with an indicator (8) for displaying the measurement.

2. Device for the optoelectronic measurement according to the preceding claim, characterised in that the electronic processing unit drives the transmitting assembly (5).

3. Device for the optoelectronic measurement according to one of the preceding claims, characterised in that it also comprises a mechanical device (4) for amplifying the displacement of the measuring means.

4. Device according to any one of the preceding claims, characterised in that the means for modifying a transmission parameter is a reflecting means (9) and/or a passage restricting means (10) and/or an optical attenuation means (11).

5. Device according to any one of the preceding claims, characterised in that the receiver (5) is formed from a ladder of photosensitive cells or from a light intensity receiver, and in that the measuring means (3) is a flexible diaphragm.

6. Device according to any one of the preceding claims, characterised in that the measuring means (3) may be an entity independent of the tank.

7. Device according to one of the preceding claims, characterised in that the liquid comes into contact with the measuring means through a passage restricting system.

8. Device according to one of the preceding claims, characterised in that the transmission system (56) comprises a reflecting means (9), which is placed on the diaphragm and serves to deflect the beam of light emerging from the transmitting assembly.

9. Device according to one of claims 1 to 7, characterised in that at least one of the transmitting or receiving assemblies (5 or 6) is integral with the measuring means, so that its deformation modifies the direction of the optical beam.

10. Device according to one of claims 1 to 7, characterised in that the measuring means (3) is reflective.

11. Device according to one of claims 1 to 7, characterised in that the displacement of the measuring means serves to restrict the luminous flux.

12. Device according to one of claims 1 to 7, characterised in that the displacement of the measuring means serves to vary the transmitter-receiver alignment.

13. Device according to one of claims 1 to 7, characterised in that the displacement of the measuring means achieves the spatial distribution of energy and modifies the distance between transmitter and receiver.

14. Device according to claim 8, characterised in that the reflecting means (9) comprises a screen with a variable coefficient of absorption.

15. Device according to one of claims 1 to 7, characterised in that the optical transmission system (56) comprises an element (11) of variable opacity, which is placed beneath the diaphragm (3) and is interposed between the transmitter and the receiver to attenuate the optical beam.

## Patentansprüche

1. Vorrichtung zur optoelektronischen Messung der Menge einer insbesondere entflammbaren Flüssigkeit in einem Behälter, **dadurch gekennzeichnet,** daß sie in Kombination folgendes enthält:
- Ein Meßglied (3), welches einen Aufnehmer für Druck oder Druckschwankungen bildet, bei dem die Verformung eine Auslenkung eines Organs (3) des genannten Meßgliedes erzeugt.
- Ein optisches Übertragungssystem (56), welches zumindest eine Emitteranordnung (5) für Lichtfluß und eine Empfängeranordnung (6) für Lichtfluß aufweist, deren Lage in Bezug auf das Meßglied (3) derart ist, daß die von dem Meßglied (3) erzeugte Auslenkung des genannten Organs (3) durch das Meßglied zumindest zu Veränderungen der Parameter der Übertragung des Lichtflusses führt, wobei diese Veränderung der Parameter eine Veränderung des an der Empfängeranordnung erhaltenen Lichtsignals erzeugt, welches in einer elektronischen Behandlungseinheit (7) umgewandelt wird, die die Vorrichtung mittels eines elektrischen Signals steuert, welches mit einer Anzeige (8) zur Meßwertdarstellung kompatibel ist.

2. Vorrichtung zur optoelektronischen Messung nach dem vorangehenden Anspruch, **dadurch gekennzeichnet,** daß die elektronische Behandlungseinheit die Emitteranordnung (5) steuert.

3. Vorrichtung zur optoelektronischen Messung nach einem der vorangehenden Ansprüche, **dadurch gekennzeichnet,** daß sie desweiteren einen mechanischen Verstärker (4) für die Auslenkung des Meßgliedes hat.

4. Vorrichtung nach einem der vorgenannten Ansprüche, **dadurch gekennzeichnet,** daß das Mittel zum Modifizieren eines Übertragungsparameters ein reflektierendes Mittel (9) und/oder ein den Durchlaß begrenzendes Mittel (10) und/oder ein optisches Schwächungsmittel (11) ist.

5. Vorrichtung nach einem der vorangehenden Ansprüche, **dadurch gekennzeichnet,** daß der Empfänger (6) aus einer Skala photosensibler Zellen gebildet oder ein Empfänger für die Lichthelligkeit ist und daß das Meßglied (3) eine biegsame Membran ist.

6. Vorrichtung nach einem der vorangehenden Ansprüche, **dadurch gekennzeichnet,** daß das Meßglied (3) eine von dem Behälter unabhängige Einrichtung sein kann.

7. Vorrichtung nach einem der vorangehenden Ansprüche, **dadurch gekennzeichnet,** daß die Flüssigkeit in Kontakt mit dem Meßglied über ein den Durchlaß begrenzendes System gelangt.

8. Vorrichtung nach einem der vorangehenden Ansprüche, **dadurch gekennzeichnet,** daß das Übertragungssystem (56) ein reflektierendes Mittel (9) aufweist, welches auf der Membran angeordnet ist und durch die Ablenkung des Lichtstrahles arbeitet, der von der Emitteranordnung ausgeht.

9. Vorrichtung nach einem der Ansprüche 1 bis 7, **dadurch gekennzeichnet,** daß zumindest eine der Emitteranordnungen (5) oder Empfänger (6) mit dem Meßglied derart verbunden ist, daß seine Verformung die Richtung des optischen Strahles verändert.

10. Vorrichtung nach einem der Ansprüche 1 bis 7, **dadurch gekennzeichnet,** daß das Meßglied (3) reflektierend ist.

11. Vorrichtung nach einem der Ansprüche 1 bis 7, **dadurch gekennzeichnet,** daß die Auslenkung des Meßgliedes durch Begrenzung des Lichtflusses erfolgt.

12. Vorrichtung nach einem der Ansprüche 1 bis 7, **dadurch gekennzeichnet,** daß die Auslenkung des Meßgliedes durch Veränderung der Ausrichtung Emitter zum Empfänger erfolgt.

13. Vorrichtung nach einem der Ansprüche 1 bis 7, **dadurch gekennzeichnet,** daß die Auslenkung des Meßgliedes die Energieverteilung im Raum ausnutzt und den Abstand zwischen dem Emitter und Empfänger verändert.

14. Vorrichtung nach Anspruch 8, **dadurch gekennzeichnet,** daß das reflektierende Mittel (9) eine Blende mit veränderlichem Absorptionskoeffizienten aufweist.

15. Vorrichtung nach einem der Ansprüche 1 bis 7, **dadurch gekennzeichnet,** daß das optische Übertragungssystem ein Bauteil (11) mit veränderlicher Opazität aufweist, welches auf der Membran (3) zwischen dem Emitter und dem Empfänger angeordnet ist, um die optische Strahlung abzuschwächen.
